# FASCICULE DE BREVET EUROPEEN

(11) **EP 1 018 818 B1**
(45) Date de publication et mention de la délivrance du brevet: **01.03.2006**
(21) Numéro de dépôt: 99403210.0
(22) Date de dépôt: 20.12.1999
(51) Int. Cl.: H04L 12/24

(54) **Architecture d'agent pouvant coopérer avec des applications corba**
Architektur eines mit CORBA Anwendungen zusammenarbeitenden Agents
Architecture of an agent able to cooperate with CORBA applications

(30) Priorité: 07.01.1999 FR 9900087
(43) Date de publication de la demande: 12.07.2000
(73) Titulaire: ALCATEL, 75008 Paris (FR)
(72) Inventeur: Hauw, Linda Hélène, 75015 Paris (FR); Potonniee, Olivier, 75006 Paris (FR); Voyer, Fabien, 75018 Paris (FR)
(74) Mandataire: Lamoureux, Bernard

(56) Documents cités:
- US-A- 5 726 979
- QINZHENG KONG ET AL: "INTEGRATING CORBA AND TMN ENVIRONMENTS" 1996 IEEE NETWORK OPERATIONS AND MANAGEMENT SYMPOSIUM (NOMS), KYOTO, APR. 15 - 19, 1996, vol. 1, no. SYMP. 5, 15 avril 1996 (1996-04-15), pages 86-96, XP000641081 INSTITUTE OF ELECTRICAL AND ELECTRONICS ENGINEERS
- JONG-TAE PARK ET AL: "DESIGN AND IMPLEMENTATION OF A CORBA-BASED TMN SMK SYSTEM" 1996 IEEE NETWORK OPERATIONS AND MANAGEMENT SYMPOSIUM (NOMS), KYOTO, APR. 15 - 19, 1996, vol. 1, no. SYMP. 5, 15 avril 1996 (1996-04-15), pages 64-74, XP000641079 INSTITUTE OF ELECTRICAL AND ELECTRONICS ENGINEERS
- DITTRICH A ET AL: "INTEGRATION OF A TMN-BASED MANAGEMENT PLATFORM INTO A CORBA-BASED ENVIRONMENT" 1996 IEEE NETWORK OPERATIONS AND MANAGEMENT SYMPOSIUM (NOMS), KYOTO, APR. 15 - 19, 1996, vol. 1, no. SYMP. 5, 15 avril 1996 (1996-04-15), pages 75-85, XP000641080 INSTITUTE OF ELECTRICAL AND ELECTRONICS ENGINEERS

## Description

La présente invention est relative aux systèmes de gestion des réseaux de télécommunication. La norme M.3010 de l'ITU-T (*International Telecommunication* Union) présente une architecture d'un tel système appelée TMN pour *Telecommunication Management Network,* ou RGT pour Réseau de Gestion des Télécommunications, en français.

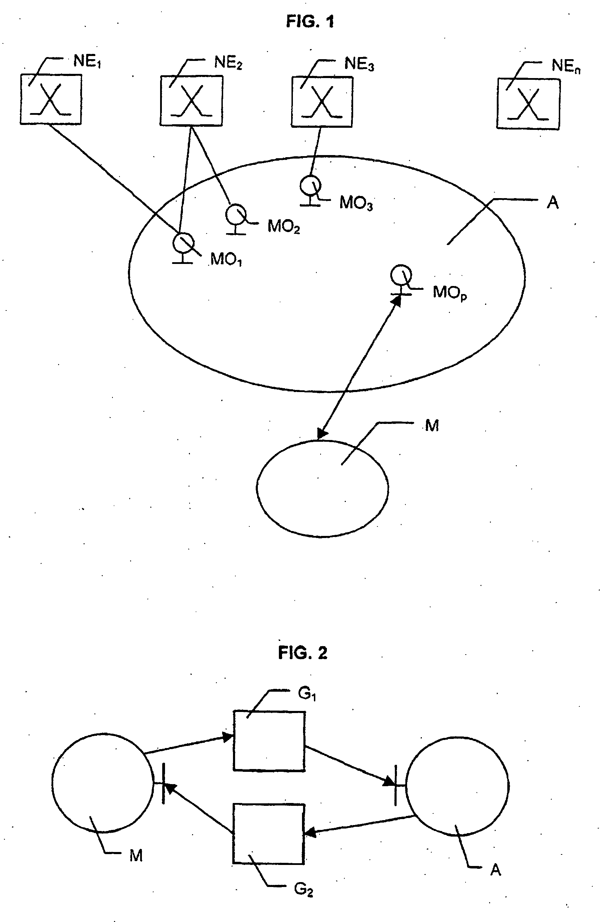

La figure 1 illustre un tel réseau de gestion des télécommunications.

Les références NE₁, NE₂...NEₙ représentent des éléments de réseau ou NE pour *Network Elements,* en anglais. Ces éléments de réseau peuvent être des ressources matérielles, comme notamment des commutateurs, ou bien logicielles.

Les références MO₁ à MOₚ représentent des objets gérés ou MO pour *Managed Objects* en anglais. Chaque objet géré forme une abstraction ou une vue d'un ou plusieurs éléments de réseau. Ainsi, l'objet géré MO₁ forme une vue des éléments de réseau NE₁ et NE₂. Ces objets gérés MO₁ à MOₚ sont « groupés » dans un composant logiciel appelé agent A.

La référence M représente un manager. Généralement, les managers communiquent avec les agents, dans les deux sens, par l'intermédiaire d'un protocole de communication de type CMIP (*Common Management Information Protocol*), ainsi que défini par la recommandation X.711 de l'ITU-T.

Toutefois, il s'avère que les RGT nécessitent de plus en plus d'ouvertures vers d'autres systèmes informatiques.

Notamment, l'architecture CORBA de l'OMG (*Open Management Group*) devient extrêmement utilisée pour les applications distribuées. Une des caractéristiques principales de CORBA (*Common Object Request Broker Architecture*) est de séparer les interfaces et les implémentations des différents objets composant une application distribuée. Les interfaces sont rédigées en un langage spécifique appelé IDL (*Interface Description Language*) et forment l'unique partie visible des objets. L'implémentation peut être effectuée en n'importe quel langage de programmation (C++ ou Java par exemple) et n'est pas visible par les autres objets de l'application.

La communication entre deux composants logiciels CORBA s'effectue par un protocole de communication appelé GIOP (*General Inter-ORB Protocol*), défini lui aussi par l'OMG.

Il est utile de tirer profit des avantages apportés par CORBA tout en gardant une compatibilité avec les recommandations de l'ITU-T. Notamment, il est utile de permettre la communication entre des agents conformes aux spécifications CORBA et des managers conformes aux spécifications de l'ITU-T, et vice-versa.

Ainsi, un agent devient un ensemble d'objets CORBA, chaque objet CORBA correspondant à un objet géré. Du fait de CORBA, le développement des objets gérés devient indépendant du système de traitement de l'information sur lequel ils sont exécutés, et notamment, de la localisation de ceux-ci sur un système réparti.

Dans un système distribué orienté objets, on distingue les interfaces dites serveurs et les interfaces dites clientes. Les interfaces serveurs permettent aux objets gérés de recevoir des messages provenant des managers. Les interfaces clientes permettent aux objets gérés d'émettre des messages à destination des managers.

Les groupes de standardisation *Telemanagement Forum,* Open Group et l'OMG (*Open Management Group*) ont adopté une solution commune pour gérer l'interopérabilité entre systèmes TMN conformes aux spécifications de l'ITU-T et ceux développés en utilisant la technologie CORBA. La spécification correspondante s'appelle « Inter-domain Management » et a été publié en novembre 1996. Son principe est illustré par la figure 2.

Le *manager* M communique avec une passerelle G₁ qui transmet ses messages à destination d'un agent A. inversement, l'agent A transmet ses messages à une passerelle G₂ qui effectue la traduction inverse à destination du manager M. Bien évidemment, les passerelles G₁ et G₂ peuvent être implémentées par la même entité physique.

Le protocole de communication utilisé entre le manager M et les passerelles G₁ et G₂ peut être le protocole GIOP de CORSA, tondis qu'entre les passerelles et l'agent A, c'est le protocole CMIP (*Common Management Information Protocol*), ainsi que défini par la recommandation X.771 de l'ITU-T, qui peut être utilisé,

Le rôle de ces passerelles est donc de traduire chaque message GIOP émanant du manager M en un ou plusieurs messages CMIP à destination de l'agent A, et réciproquement, de traduire chaque message CMIP provenant de l'agent A en un ou plusieurs messages GIOP à destination du manager M.

La configuration inverse est, bien entendu, tout autant possible, et l'agent A peut être conforme aux spécifications CORSA et communiquer avec les passerelles via le protocole GIOP, tandis que le manager, conforme aux recommandations de l'ITU-T, communique avec les passerelles selon le protocole CMIP. De telles solutions sont par exemple décrites dans « *Integrating CORBA and TMN environments »* de Q. Kong et al. et dans « *Design and implementation of a CORBA-based TMN SMK System »* de Jong-Tao Park et al. »

Cette idée d'insérer une fonction de passerelle pour effectuer les traductions, incite tout naturellement l'homme du métier à implanter cette fonction sous la forme d'un module logiciel autonome.

Toutefois, l'existence d'un module logiciel autonome effectuant les traductions présente de nombreux inconvénients, parmi lesquels :
- Un certain nombre d'informations sont déjà présentes dans les managers et/ou dans les agents. Le fait de créer une nouvelle copie de ces informations a pour effet d'augmenter le nombre de ressources utilisées dans le système.
- Une communication entre un *manager* et un agent passera toujours par le module de traduction. Il en résulte deux communications, une entre le *manager* et la passerelle, l'autre entre la passerelle et l'agent. Les communications entre modules autonomes étant coûteuses en temps, le doublement de celles-ci provoque une dégradation importante des performances du système.
- Chaque module autonome consomme une quantité minimale de ressources du système. Par exemple, chaque module se voit attribuer par le système une part de la mémoire pour s'exécuter. Augmenter le nombre de modules revient à augmenter le nombre de ressources utilisées dans le système.
- La multiplication du nombre de modules dans le système complexifie la maintenance de ce système. Ce problème est particulièrement manifeste lorsque les modules ont de fortes interdépendances, ce qui est le cas dans les réseaux de gestion des télécommunications. Par exemple, il peut être nécessaire de contrôler l'ordre dans lequel les modules sont démarrés et l'arrêt de l'un des modules peut nécessiter d'arrêter et de redémarrer d'autres modules.

La présente invention a pour but de fournir une solution alternative à ce problème de communication entre applications logicielles hétérogènes dans un contexte de gestion de réseaux de télécommunications, qui soit conforme aux normes issues de l'ITU-T et du groupe OMG-NMF, et qui améliore de façon sensible les performances.

Plus précisément, l'invention a pour objet un agent comportant un ensemble d'objets gérés, au sein d'un réseau de gestion des télécommunications, chacun de ces objets gérés possédant des moyens pour émettre et recevoir des messages selon le protocole CMIP et, en outre, des moyens pour accéder à des interfaces CORBA clientes ou être accédé par des interfaces CORBA serveurs, ces interfaces étant contenues dans l'agent.

Selon différents modes de réalisation de l'invention, les interfaces CORBA peuvent être contenues dans les objets gérés, ou bien contenues dans des objets représentants associés à ces objets gérés.

Dans ce dernier cas, on peut distinguer des mises en oeuvre différentes suivant qu'il s'agit d'interfaces CORBA serveurs ou d'interfaces CORBA clientes.

Dans le cas d'interfaces CORBA serveurs, chacun des objets représentant peut être associé à un unique objet géré, ou bien chaque objet représentant peut être associé à un ensemble d'objets gérés, et peut posséder un moyen d'aiguillage des messages arrivant sur l'interface CORBA qu'il contient vers le ou les objets gérés concernés parmi ledit ensemble.

Dans le cas d'interfaces CORBA clientes, chaque manager susceptible de recevoir des messages provenant des objets gérés contenus dans l'agent peut être représenté par un objet représentant situé à l'intérieur de l'agent qui comporte l'interface CORBA cliente lui correspondant.

Un agent conforme à l'invention est donc à même de communiquer à la fois avec des applications (notamment des managers) conformes aux spécifications CORBA en utilisant le protocole GIOP, et à des applications (notamment des managers) conformes aux recommandations de l'ITU-T en utilisant le protocole CMIP.

De plus, bien que les interfaces CORBA en IDL et leurs implémentations soient contenues dans l'agent, cette solution reste conforme aux spécifications "Inter-domain management".

Les différents avantages et caractéristiques de l'invention apparaîtront de façon plus claire dans la description qui va suivre en référence aux figures annexées.
La figure 1, déjà commentée, illustre de façon extrêmement schématique l'architecture générale d'un réseau de gestion des télécommunications conforme à la recommandation M.3010 de l'ITU.
La figure 2, également déjà commentée, représente l'architecture générale de l'interface d'un agent conforme aux normes OSI avec un *manager* conforme aux spécifications "Inter-domain management".
La figure 3 illustre un premier mode de réalisation de l'invention.
La figure 4 illustre un deuxième mode de réalisation de l'invention.
La figure 5 illustre un troisième mode de réalisation de l'invention.
La figure 6 illustre le procédé d'instanciation des objets représentants lors de leur première utilisation.
La figure 7 illustre un quatrième mode de réalisation de l'invention concernant les interfaces clientes des objets gérés.
La figure 8 représente la chaîne de production d'un agent conforme à l'invention.

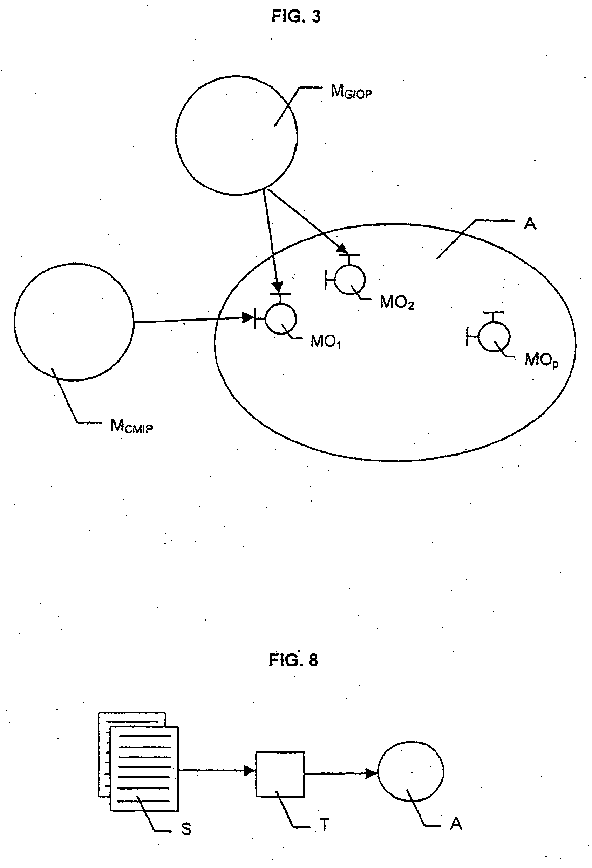

Sur la figure 3, qui illustre un premier mode de réalisation de l'invention, on voit que chacun des objets gérés MO₁, MO₂...MOₚ possède deux interfaces serveurs, symbolisées par deux traits en forme de T, l'une étant conforme aux normes de l'ITU-T, et l'autre étant conforme aux spécifications CORBA, c'est à dire qu'il s'agit d'une interface rédigée en IDL.

De cette façon, chaque objet géré (par exemple MO₁) peut :
- recevoir des messages CMIP d'un manager M_{CMIP} conforme aux recommandations de l'ITU-T, et
- recevoir des messages d'un manager M_{GIOP} conforme aux spécifications CORBA de l'OMG.

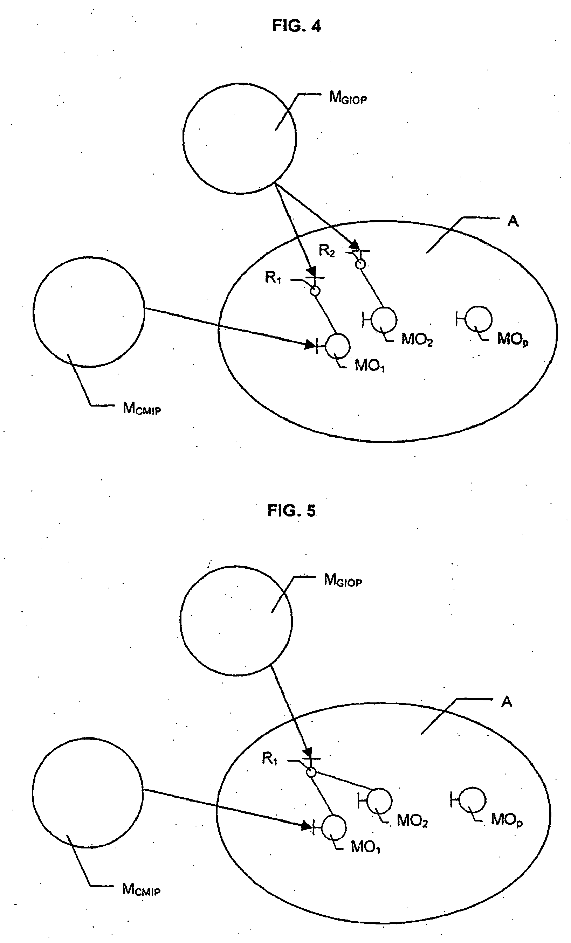

La figure 4 représente un deuxième mode de réalisation de l'invention. On voit que chacun des objets gérés MO₁, MO₂...MOₚ est associé à un objet représentant R₁, R₂,...Rₚ. Chacun des objets représentants possède une interface serveur CORBA. Dans ce mode de réalisation particulier, les objets gérés gardent la possibilité de communiquer par eux-mêmes par le protocole CMIP, tout en pouvant, par l'intermédiaire des objets représentants auxquels ils sont associés, recevoir des messages via le protocole GIOP.

Ainsi, par exemple, l'objet géré MO₁ peut communiquer avec le *manager* M_{CMIP} par le protocole de communication CMIP, et avec le *manager* M_{GIOP} par l'intermédiaire de l'interface CORBA de l'objet représentant R₁ auquel il est associé, cet objet représentant et le *manager* M_{GIOP} communiquant ensemble par le protocole GIOP.

Selon une mise en oeuvre particulière, ces objets représentants ne sont créés que lorsqu'un message doit transiter par l'interface CORBA, c'est-à-dire en fait lors de la première utilisation.

La figure 5 illustre une troisième mise en oeuvre possible d'un agent conforme à l'invention. Selon cette mise en oeuvre, un groupe d'objets gérés se partage un même objet représentant auquel ils sont logiquement associés.

Pour ce faire, les objets représentants possèdent des moyens pour aiguiller les messages reçus de l'extérieur (notamment d'un manager), vers le (ou les) objets gérés concernés parmi ceux auquel il est logiquement associé.

Ainsi, par exemple, les objets gérés MO₁ et MO₂ se partagent le même objet représentant R₁. Lorsque ce dernier reçoit un message provenant du manager M_{GIOP}, il détermine d'abord à quel objet géré il doit le transmettre (ici, soit MO₁, soit MO₂).

Les différents objets gérés conservent par ailleurs les interfaces leur permettant de communiquer par le protocole CMIP à des managers conformes aux recommandations de l'ITU-T.

De la même façon que pour le deuxième mode de réalisation, une mise en ceuvre particulière peut prévoir que les objets représentants ne sont instanciés que lors de leurs premières utilisations.

Cette façon de faire est intéressante car on remarque qu'au sein d'un agent tous les objets gérés ne seront pas forcément utilisés. Aussi, en ne créant les objets représentants que lorsqu'on en a besoin (c'est-à-dire lors de leur première utilisation), les ressources physiques qui supportent l'ogent auront moins d'objets à gérer. Cela implique un double avantage :
- Les ressources mémoires utilisées sont moindres.
- Les structures de données permettant d'accéder à un objet sont plus compactes, et les temps d'exécution sont donc plus courts.

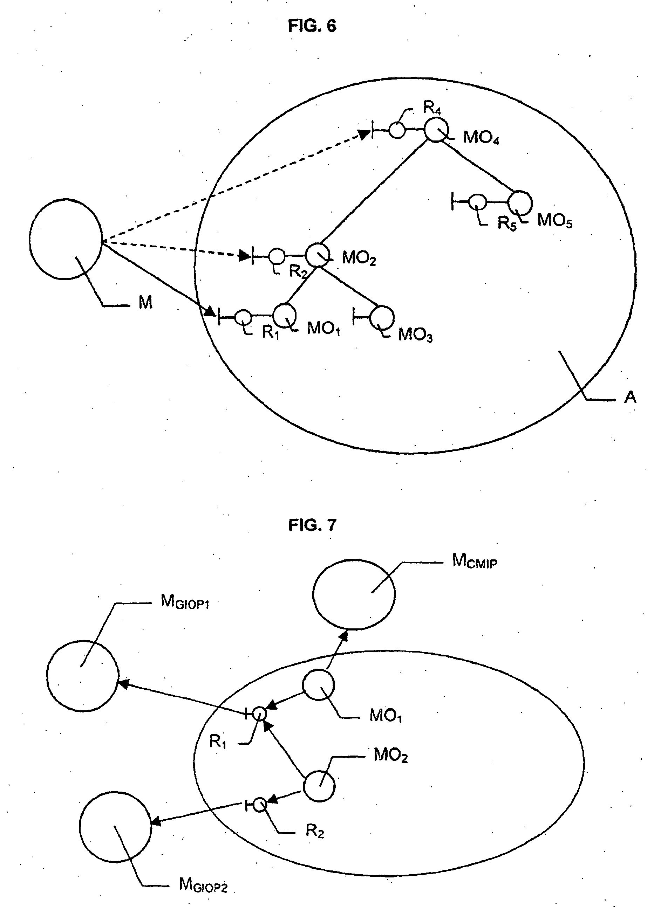

La figure 6 illustre un procédé permettant de ne créer les objets représentant qu'à leur première utilisation.

On sait que les objets gérés sont structurés de façon arborescente.

Lorsqu'un manager M veut accéder à un objet géré MO₁ par le profiocole de communication GIOP, il le fait conformément au service de nommage CORBA. Autrement dit, il doit s'adresser à un objet géré hiérarchiquement supérieur dans l'arborescence de nommage (ou naming tree, en anglais), à condition que celui-ci possède un objet représentant. Pour pouvoir accéder au premier objet, il est donc nécessaire qu'au moins l'objet racine possède dès le départ un objet représentant.

Lorsque la requête GIOP émanant du *manager* M est reçue par un objet géré de l'arborescence, celui-ci la communique à l'objet géré cible (MO₁) via l'arborescence. Lorsqu'il la reçoit, ce dernier sait qu'un manager cherche à le joindre. Il crée alors son objet représentant R₁ dont il communique l'adresse de son interface CORBA au manager M.

À partir de ce moment, le manager M est à même d'envoyer des messages GIOP sur l'interface CORBA de l'objet représentant R₁.

La figure 7 illustre une mise en oeuvre possible des interfaces CORBA clientes.

Chacun des *managers* M_{GIOP1} et M_{GIOP2} est représenté par un objet représentant, respectivement R₁ et R₂, à l'intérieur de l'agent A. Les objets gérés MO₁ et MO₂, voulant envoyer des messages au *manager* M_{GIOP1} transmettent ces messages à l'objet représentant R₁ qui les transmet au manager M_{GIOP1} via le protocole GIOP.

De la même façon, l'objet géré MO₂ peut envoyer des messages au *manager* M_{GIOP2} via l'objet représentant R₂.

Une autre possibilité de mise en oeuvre est bien évidemment d'implémenter les interfaces CORBA clientes à l'intérieur des objets gérés eux-mêmes.

La figure 8 illustre le procédé de production d'un agent conforme à l'invention, de façon totalement transparente pour le développeur de l'agent.

Ainsi que cela est effectué dans l'état de la technique, le comportement des objets gérés contenus dans l'agent est d'abord spécifié dans un jeu S de documents sources. De jeu de documents comporte à la fois des documents de modélisation écrits par exemple en GDMO (*Guidelines for the Definition of Managed Objects*) qui est un langage spécifié dans la recommandation X.722 de l'ITU-T, et des documents d'implémentation du comportement de ce modèle, écrits à l'aide de langages de programmation tels que C++.

Cette spécification se fait de façon indépendante de l'implémentation. Autrement dit, le développeur de l'agent ne prend pas en compte les protocoles de communications qui seront mis en oeuvre. Plus particulièrement, il ne s'intéresse pas à savoir si l'agent peut ou non communiquer en utilisant le protocole GIOP.

Ensuite, ce jeu S de documents sources est traité par un ensemble T d'outils qui vont transformer ce jeu S en un agent A, exécutable sur un système de traitement de l'information cible. C'est cet ensemble d'outils T qui est modifié et ajoute, de façon totalement transparente, les fonctionnalités de communication par le protocole GIOP, à l'agent A.

## Revendications

1. Agent (A) comportant un ensemble d'objets gérés (MO₁, MO₂... MOₚ), au sein d'un réseau de gestion des télécommunications, chacun de ces objets possédant des moyens pour émettre et recevoir des messages selon le protocole CMIP, chaque objet géré possède en outre des moyens pour accéder à des interfaces CORBA clientes ou être accédé par des interfaces CORBA serveurs, **caractérisé en ce que** lesdites interfaces CORBA serveurs et lesdites interfaces CORBA clientes étant contenues dans ledit agent (A).

2. Agent selon la revendication 1, **caractérisé en ce que** lesdites interfaces CORBA serveurs et lesdites interfaces CORBA clientes sont contenues dans des objets représentants (R₁, R₂...) associés auxdits objets gérés (MO₁, MO₂... MOₚ).

3. Agent selon la revendication précédente, **caractérisé en ce que** l'interface CORBA serveur permettant d'accéder à un objet géré est contenue dans un objet représentant, et **en ce que** ledit objet représentant est associé uniquement audit objet géré.

4. Agent selon la revendication 2, **caractérisé en ce que** l'interface CORBA serveur permettant d'accéder à un objet géré est contenue dans un objet représentant, **en ce que** chaque objet représentant est associé à un ensemble d'objets gérés, et **en ce qu'**il comporte un moyen permettant d'aiguiller les messages arrivant sur ladite interface CORBA serveur vers le ou les objets gérés concernés dans ledit ensemble.

5. Agent selon l'une des revendications 2 à 4, **caractérisé en ce que** les messages destinés à un même manager sont transmis via un même objet représentant.

6. Agent selon l'une des revendications 3 ou 4, **caractérisé en ce que** lesdits objets représentants sont instanciés lors de leur première utilisation:

## Claims

1. Agent (A) including a set of managed objects (MO₁, MO₂ ... MOₚ) within a telecommunications management network, each object including means for sending and receiving CMIP messages and each managed object also includes means for accessing client CORBA interfaces or to be accessed by server CORBA interfaces, **characterised in that** said server CORBA interfaces and said client CORBA interfaces are contained in said agent (A),

2. Agent according to claim 1 **characterised in that** said server CORBA interfaces and said client CORBA interfaces are contained in representative objects (R₁, R₂ ...) associated with said managed objects (MO₁, MO₂ ... MOₚ).

3. Agent according to claim 2 **characterised in that** said server CORBA interface providing access to a managed object is contained in a representative object and **in that** said representative object is associated only with said managed object.

4. Agent according to claim 2 **characterised in that** said server CORBA interface enabling access to a managed object is contained in a representative object **in that**, each representative object is associated with a set of managed objects and **in that** it includes means for routing messages arriving at said server CORBA interface to the managed object(s) concerned in said set.

5. Agent according to one of claims 2 to 4 **characterised in that** messages addressed to the same manager are transmitted via the same representative object.

6. Agent according to either of claims 3 and 4 **characterised in that** said representative objects are instantiated when they are used for the first time.

## Patentansprüche

1. Agent (A), der in einem Telekommunikationsverwaltungsnetz eine Menge von verwalteten Objekten (MO₁, MO₂ MOₚ) beinhaltet, wobei jedes dieser Objekte Mittel zum Senden und Empfangen von Nachrichten gemäß dem CMIP-Protokoll besitzt, jedes verwaltete Objekt außerdem Mittel für den Zugriff auf CORBA-Client-Schnittstellen besitzt oder Mittel, damit CORBA-Server-Schnittstellen Zugriff auf dieses Objekt nehmen können, **dadurch gekennzeichnet, dass** diese CORBA-Server-Schnittstellen und diese CORBA-Client-Schnittstellen in diesem Agenten (A) enthalten sind.

2. Agent gemäß Anspruch 1, **dadurch gekennzeichnet, dass** diese CORBA-Server-Schnittstellen und diese CORBA-Client-Schnittstellen in Repräsentantenobjekten (R₁, R₂ ,...) enthalten sind, die mit diesen verwalteten Objekten (MO₁, MO₂...MOₚ) verknüpft sind.

3. Agent gemäß dem vorstehenden Anspruch, **dadurch gekennzeichnet, dass** die CORBA-Server-Schnittstelle, die den Zugriff auf ein verwaltetes Objekt ermöglicht, in einem Repräsentantenobjekt enthalten ist und **dadurch**, dass dieses Repräsentantenobjekt nur mit diesem verwalteten Objekt verknüpft ist.

4. Agent gemäß Anspruch 2, **dadurch gekennzeichnet, dass** die CORBA-Server-Schnittstelle, die den Zugriff auf ein verwaltetes Objekt gestattet, in einem Repräsentantenobjekt enthalten ist, **dadurch**, dass jedes Repräsentantenobjekt mit einer Menge von verwalteten Objekten verknüpft ist, und **dadurch**, dass es ein Mittel beinhaltet, das es gestattet, die an dieser CORBA-Server-Schnittstelle ankommenden Nachrichten an das oder die betreffende/n verwaltete/n Objekt/e in dieser Menge zu leiten.

5. Agent gemäß einem der Ansprüche 2 bis 4, **dadurch** gekennzcichnet, dass die für ein und denselben Manager bestimmten Nachrichten, über ein und dasselbe Repräsentanienobjekt übertragen werden.

6. Agent gemäß Anspruch 3 oder 4, **dadurch gekennzeichnet, dass** diese Repräsentantenobjekte bei ihrer ersten Nutzung instanziiert werden.
